# EUROPEAN PATENT APPLICATION

(11) **EP 0 843 962 A1**
(43) Date of publication of application: **27.05.1998**
(21) Application number: 96118739.0
(22) Date of filing: 22.11.1996
(51) Int. Cl.: A01N 25/00, A01N 25/34, A01N 43/56, A01M 1/24, A01M 17/00

(54) **Flexible web containing 1-arylpyrazole pesticide**

(71) Applicant: RHONE-POULENC AGROCHIMIE, 69009 Lyon (FR)
(72) Inventor: Grenet, Marc, 69290 Saint Genis les Ollieres (FR); Teufel, Eberhard, 79194 Gundelfingen (DE); Maurer, Günther, 79395 Neuenburg (DE)

(57) **Abstract**

A flexible web comprising water-insoluble fibers, said fibers comprising an effective amount of a 1-arylpyrazole pesticide.

Method for controlling the infestation of buildings by subterranean pests, which comprises applying on the excavation site before the erection of the building said flexible webs.

## Description

The present invention relates to a pest control flexible web and to its use for controlling the infestation of buildings by pests, especially by subterranean pests, more particularly by termites and other wood consuming pests.

The damage to buildings, especially wood containing buildings, by many pests, especially by subterranean pests, particularly by termites, is very extensive, and various procedures are widely employed to minimize and prevent such damage.

Subterranean pest control devices devised to be disposed in an excavation prior to the construction of buildings therein are known in the art.

USP 2899771 describes a two-layer system including a flexible relatively thin vapor barrier such as a polyethylene film, coated with a flexible water soluble carrier impregnated with a pesticide. During the use of such a system, the condensation entailed by the use of the vapor barrier is effective to disperse the pesticide. Such a system quickly releases the pesticide and is not quite effective to control subterranean pests for extended periods of time.

USP 3940875 seeks to fullfill the need for a control over extended periods of time by proposing to distribute in the soil closed receptacles containing a termite pesticide, such as containers, which may be formed of a synthetic resin. The pesticide is released after a long period of time, either because the resin weathers and ruptures, or because it is attractive to termites which consume it. Such a system requires however an additionnal pesticidal treatment of the soil by impregnation to provide initial protection. Furthermore it does not create a uniform and continuous barrier against termites.

More recently, WO 90/14004 described a flexible, untreated blanket which is used, for example, to line a building excavation and then is impregnated with a suitable pesticide. This device was further improved by USP 5224288. EP 626134 sought to improve the long term efficacy of such blankets by proposing the incorporation of a liquid delivery system in order to recharge the membrane with pesticide, which system is sophisticated and complex. Anyway, so far as these blankets have a pesticide coated on the fiber surface, they may cause exposure to hazardous substances for the workers of the building site who handle them and/or are working in their neighbourhood.

One aim of the present invention is to remedy the drawbacks of the known pest control devices.

Another aim of the present invention is to provide a new article for controlling the infestation of buildings by pests.

Another aim of the present invention is to provide a new article for controlling the infestation of buildings by subterranean pests, applicable as a liner in an excavation prior to the construction of buildings.

Another aim of the present invention is to provide a new article able to create in the soil a continuous pest resistant barrier.

Another aim of the present invention is to provide a new article effective to control subterranean pests both soon after building and for extended periods of time thereafter.

Another aim of the present invention is to provide a new article effective against subterranean pests and safe from an environmental point of view.

Another aim of the present invention is to provide a new article effective against subterranean pests and substantially free from safety and fire hazards during storage, before use, and after being laid out on the building site.

Another aim of the present invention is to provide a new article effective against subterranean pests and safe for the workers who manufacture it and the workers of the building site.

Another aim of the present invention is to provide a new article effective against subterranean pests and which reduces contact between workers and the pesticide, in particular through a reduced rate of distribution of the pesticide.

Another aim of the present invention is to provide a new article effective against subterranean pests and easy to lay in the excavations of the building site and having good mechanical properties and particularly good resistance to tear.

Another aim of the present invention is to provide a new article effective against subterranean pests and simple to manufacture.

It has now been found that these aims can be achieved in all or in part by virtue of the subterranean pest control flexible web according to the invention, and other aims will appear to those skilled in the art relating to building construction when reading this specification.

The pest control flexible web according to the invention is a flexible web comprising water-insoluble fibers, said fibers comprising an effective amount of a 1-arylpyrazole pesticide of formula (I) : 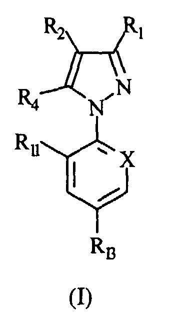 wherein :
R₁ is a halogen or a CN or methyl group ;
R₂ is S(O)ₙR₃ or 4,5-dicyanoimidazol-2-yl or haloalkyl ;
R₃ is alkyl or haloalkyl ;
R₄ represents a hydrogen or halogen ; or a radical NR₅R₆, S(O)ₘR₇, C(O)R₇ or C(O)O-R₇, alkyl, haloalkyl or OR₈ or a radical -N=C(R₉)(R₁₀) ;
R₅ and R₆ represent independently from each other a hydrogen or an alkyl, haloalkyl, C(O)alkyl, or S(O)ᵣCF₃ radical; or R₅ and R₆ may form together a divalent alkylene radical which may be interrupted by one or two divalent heteroatoms, such as oxygen or sulfur ;
R₇ represents an alkyl or haloalkyl radical ;
R₈ represents an alkyl, haloalkyl radical or a hydrogen ;
R₉ represents an alkyl radical or a hydrogen ;
R₁₀ represents a phenyl or heteroaryl group optionally substituted by one or more halogen atoms or groups such as OH, -O-alkyl, -S-alkyl, cyano, or alkyl ;
X represents a trialent nitrogen atom or a C-R₁₂ radical, the three other valencies of the carbon atom being part of the aromatic ring ;
R₁₁ and R₁₂ represent, independently from each other, a hydrogen or halogen and optionally CN or NO₂ ;
R₁₃ represents a halogen or a haloalkyl, haloalkoxy, S(O)_{q}CF₃ or SF₅ group ; and
m, n, q, r represent, independently from each other, an integer equal to 0, 1 or 2 ;
   with the proviso that, when R₁ is methyl, then either R₃ is haloalkyl, R₄ is NH₂, R₁₁ is Cl, R₁₃ is CF₃, and X is N ; or R₂ is 4,5-dicyanoimidazol 2-yl, R₄ is Cl, R₁₁ is Cl, R₁₃ is CF₃, and X is =C-Cl.

The pesticide is preferably uniformly distributed in the fibers.

The alkyl radicals in the definition of formula (I) generally comprise from one to six carbon atoms. The cycle formed by the divalent alkylene radical represented by R₅ and R₆ and including the nitrogen atom to which R₅ and R₆ are linked, is generally a 5, 6 or 7 membered ring.

A preferred class of compounds of formula (I) includes compounds such that R₁ is CN, and/or R₃ is haloalkyl, and/or R₄ is NH₂, and/or R₁₁ and R ₁₂ are independently from each other a halogen atom and/or R₁₃ is haloalkyl.

A compound of formula (I) most particularly preferred is:
1-[2,6-Cl₂ 4-CF₃ phenyl] 3-CN 4-[SO-CF₃] 5-NH₂ pyrazole,
also called fipronil.

The compounds of formula (I) may be prepared according to at least one of the processes described in the patent applications WO 87/3781, 93/6089, 94/21606 or EP 295117, or according to any other process known by one skilled in the art of chemical synthesis.

The flexible web according to the invention can be simply applied, without special equipment, by lay workmen, in the excavation site before the erection of a building, in order to protect the building against subterranean pests, particularly against termites. They are easy to handle and substantially safe from fire hazards during storage. Moreover they show a good mechanical strength including good resistance to rupture, wear and tearing off, which is particularly desirable when the ground of the building site is uneven in nature for example when comprising gravel. The flexible webs provide after erection of the building a protection against subterranean pests, particularly termites, which advantageously extends over at least 50 years, preferably at least 25 years.

Further, when buried in the ground, for instance below building foundations, the web according to the invention allows water and air to circulate across it, which enables a good repartition of the hydrostatic pressure of these fluids in the soil. This property is desirable for a good stability of certain types of ground, and therefore the resulting stability of the building, especially in regions likely to exhibit sismic risks. This property is also desirable when the web according to the invention is buried in the soil below trees to be protected from subterranean pests, especially from termites, particularly the trees which are planted in towns.

According to a preferred embodiment, the web according to the invention, has an air permability which is from 50 to 10 000 l.s⁻¹m⁻², preferably from 70 to 5000 l.s⁻¹m⁻².

Air permeability is measured by the quantity of air which crosses through 2 opposite surfaces of a standard area of web, under a standard time and a pre-determined pressure, in accordance with one of the following equivalent test methods : ISO 9237, AFNOR G 07-111, ASTM D 737, DIN 53887. The standard area of web is usually from 20 to 50 cm². A device adapted to this measurement is an automatic air permeability tester, such as TEXTEST FX 3300 from TEXTEST. This device comprises basically a suction pump drawing air through an interchangeable test head with a circular opening over which the specimen of web to be tested is clamped, and means for measuring the air flow through the specimen and the pressure drop.

As mentioned before, the compound of formula (I) is generally uniformly distributed in the fibers of the web according to the invention. More particularly, and according to a preferred embodiement, the fibers are substantially free from pores, and the compound of formula (I) is therefore not located in pores, but mixed with the solid material of the fiber. Such a property is particularly desirable for a compound which, as a pesticide, is likely to present a risk in case of contact with man. The web according to the invention is therefore particularly safe for the health of the workmen who handle them in order to lay them out and who are generally involved in the building of the foundations. It is in particular advantageously free from any pesticide exudation ad evaporation problems. By "substantially free from pores", it is intended that the fibers have a pore diameter less than 10 nanometers, preferably less than 1 nanometer. Such a feature may be observed for instance by means of scanning electron microscopy.

According to another aspect of the invention, the web is provided as strips having a width of from 20 cm to 4 m, preferably from 30 cm to 3 m. When the web is used to line the excavations of buildings foundations, these strips are advantageously arranged parallel to each other and overlapping with each other, on the required length. An important advantage of the web according to the invention is that, its efficacy is maintained even if the strips do not quite overlap, and even if they show a substantial number of punches or holes or cracks. Despite the possible presence of cracks in the strips, due to possible manufacture defects, the risk of these cracks leading to tear of the strips when they are laid in the excavations of building foundations is advantageouly reduced.

The web according to the invention has usually a thickness from 0.05 mm to 2 cm, preferably from 0.1 to 1 cm and a weight per square meter from 10 to 2500 g/m², preferably 100 to 1000 g/m².

The fibers of the web according to the invention are generally man-made fibers either based on chemically modified natural organic polymers such as cellulose derivatives or on synthetic organic polymers such as polyacrylonitriles, aromatic polyamides, aliphatic polyamides, polyolefins and the like. Within the meaning of the present text, fibers include both fibers with finite lengths and filaments with continuous lengths. The compound of formula (I) is incorporated in the fibers by mixing with either the molten polymer, or a suitable organic solution of the polymer, before the extrusion process through a suitable, generally metallic die.

Webs can be produced from these fibers by a variety of processes well known to one skilled in the art to form woven, knitted or non woven fabrics.

According to another aspect of the invention, the fibers of the web are made of a cellulosic derivative, preferably an ester of cellulose, more preferably of cellulose acetate. This variant of the invention, is particular advantageous for maintaining a high efficacy of the pesticide.

A non woven web is preferred. In that case, the fibers are in the form of fragments with a length usually lying from 2 to 30 mm, preferably from 10 to 30 mm. The web may comprise any ingredient known in the art of non woven web making such as a binder or a dye.

The fibers of the web according to the invention may present a section of diverse shapes, such as circular, like a "Y", a "X" or a "I". They generally have a diameter comprised from 5 to 500 µm, preferably from 15 to 100 µm. Their linear weight is generally from 0.5 to 50 decitex, preferably from 1 to 25 decitex. One decitex is the weight expressed in grams of 10 000 m of fiber.

The amount of the compound of formula (I) in the fibers is generally such as to have a web with a content of said compound from 0.01 to 20 g/m², preferably from 0.1 to 10 g/m². The amount of the compound of formula (I) in the fibers is generally from 0.05 to 25 %, preferably from 0.1 to 15 % by weight.

The low content of the compound of formula (I) in the web according to the invention, combined with its extended efficacy in time makes it very valuable when the soil to be treated is located in an area where water pollution may be a problem, such as in the neighbourhood of wells, rivers or ground water.

The present invention also relates to a method for controlling the infestation of buildings by subterranean pests, which comprises applying on the excavation site before the erection of the building a flexible web according to the invention. This method provides both initial and long term protection against subterranean pests, and particularly against termites. It is particularly advantageous for the houses which include a concrete floor slab resting directly on the ground. Indeed, in such a case when a pesticidal retreatment of the soil underneath the houses, after some period of time, is necessary, it is not possible to use known techniques such as impregnation which require direct access to the ground. The method according to the invention is also particularly advantageous for crawl space houses, where small spaces are available between the ground and the foundations, which make possible a retreatment of the ground against termites by impregnation. However, owing precisely to the restricted size of these spaces, such retreatment increases professional pest control operators exposure to potentially health hazardous substances.

Among subterranean pests controlled by the method according to the invention, termites are more particularly preferred.

Buildings which can be protected against subterranean pests can be, for example, houses, blocks of flats, or storehouses or warehouses. Among these buildings, wood containing buildings are more particularly preferred whatever the precise location of the wood parts within the building, even well above ground level, like beams.

The application of the webs in the excavation site may generally be made by laying out large strips on the soil, preferably parallel to each other and overlapping, in all the parts of the excavation which are likely to be in contact with the building to be erected, even narrow trenches or holes.

These strips may have a width, for example, from 20 cm to 4 m, preferably from 30 cm to 3 m. For instance, the strips are laid out in such a way as to line the horizontal and vertical walls of the excavation. It is an advantage of the present method, thanks to the good mechanical properties of the web, to be able to cover large surfaces of ground and also all kinds of excavations required for building foundations, whatever their size and shape.

The following examples are given in order to illustrate the present invention, and should not in any way be construed as restricting or limiting it.

### Example 1:

Cellulose acetate is dissolved with fipronil in acetone in order to obtain a spinning solution containing (weight %):

| | |
|---|---|
| cellulose acetate : | 30 % |
| fipronil : | 1 % |
| acetone : | 69 % |

This solution is forced under pressure through a metallic dye containing many tiny holes into a heated zone where the continuous filaments solidify as the solvent evaporates.

This continuous filament, with a circular section, is cut into fragments of 18 mm length. These fragments have a diameter of around 80 µm and a linear weight of 15 decitex. Sections of these fragments are examined by means of scanning electron microscopy with a magnification of 30000 : no pores are observed. The content in fipronil of the fiber is around 3 %.

Polyvinyl alcohol fibers of 2 mm length are mixed, as a binder, with these fragments at a ratio of 10 % weight and the whole mixture is processed in conventional paper making equipment. The non woven web, paper like material, obtained is 2 mm thick, has a weight per square meter equal to 150 g/m², and a fipronil content equal to 3 g/m².

The air permeability of this non woven web is 2000 l.s⁻¹m⁻².

A disk of 30 mm of this non woven web is laid on a horizontal wood board and is used to close the open end of a vertical cylindrical chamber with a length of 110 mm and an internal diameter of 25 mm. This chamber is filled with ordinary sand to two thirds of its height. 50 termites of the *Reticulitermes santonensis* species have been introduced in the upper third of the chamber. The sand is maintained at a constant moisture during the test, by introducing water every day (1 volume of water for 4 volumes of sand). The non woven disk is sealed to the vertical chamber by means of a suitable glue, non toxic for the termites.

After 4 days, a rate of mortality of 100 % is observed.

The rate of mortality observed on a control test using the same disk of non woven fabric but without incorporating fipronil is 0%.

This test shows the excellent efficacy of the webs according to the invention against termites.

### Example 2 :

Example 1 is repeated but introducing termites of the species *Heterotermes indicola* instead of *Reticulitermes santonensis*.

After 5 days, the same results as in example 1 are obtained.

### Example 3 :

Example 1 is repeated using a 30 mm disk of non woven web, with a hole of 1 cm in its center, in parallel with a 30 mm disk without hole, for webs with a content in fipronil of 0.5 g/m², 3 g/m², and 6 g/m².

The efficacy of such disks, measured by the number of days necessary to observe a mortality rate of 100 %, is pointed out in the following table :

| Fipronil content (in g/m²) | 0.5 | 3 | 6 |
|---|---|---|---|
| disk with 1 cm hole | 7 days | 4 days | 2 days |
| disk without hole | 7 days | 4 days | 2 days |

This test shows that the efficacy of the web according to the invention is maintained, even when there happens to be holes in it.

### Example 4 :

A 30 mm disk of non woven cellulose acetate fibers containing fipronil in a content of 0 ; 0.5 ; 3 ; 6 g/m² is obtained as in example 1.

These 4 disks are used in test devices similar to the one described in example 1.

Each disk is laid on a horizontal wood board A ; a second horizontal wood board B, 1 cm thick, is laid on the disk and a vertical cylinder chamber as used in example 1, is fixed on the wood board B, in such a way that the disk and the vertical chamber are co-axial.

The experiment of example 1 is reproduced, after introducing 250 termites in each of the 4 test devices.

The following results are observed after 3 weeks.

For the disk without fipronil : the rate of mortality was 0 %. Furthermore, board B was pierced by termites, there was a hole of 1 cm diameter in the disk, and board A also showed signs of attack by termites.

For the disk with a fipronil content of 0.5 g/m² : the rate of mortality was 98 %. Board B was pierced, there was a hole of 3 mm diameter in the disk, but board A showed no sign of attack by termites.

For the disk with a fipronil content of 3 g/m² : the rate of mortality was 100 %. Board B was pierced, there was a hole of 1 mm diameter in the disk, and board A showed no sign of attack by termites.

For the disk with a fipronil content of 6 g/m² : the rate of mortality was 100 %. Board B was not pierced by the termites, and neither the disk nor board A showed any sign of attack by termites.

### Example 5 :

Example 1 was repeated by using 3 disks of non woven web containing fipronil at a rate of 0.5 ; 3 ; and 6 g/m².

These disks had been previously allowed to stay during 3 weeks in a non sterile soil, with an atmosphere at 80% relative humidity, and at a temperature of 30°C.

After 6 days a rate of mortality of 100 % was observed for the 3 rates.

This test shows that the web according to the invention keeps its efficacy, even after being buried in the soil during a period of time.

## Claims

1. A flexible web comprising water-insoluble fibers, said fibers comprising an effective amount of a 1-arylpyrazole pesticide of formula (I) : 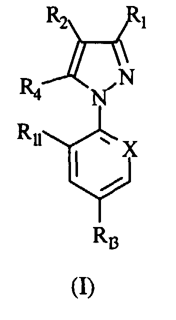 wherein :
R₁ is a halogen or a CN or methyl group ;
R₂ is S(O)ₙR₃ or 4,5-dicyanoimidazol-2-yl or haloalkyl ;
R₃ is alkyl or haloalkyl ;
R₄ represents a hydrogen or halogen ; or a radical NR₅R₆, S(O)ₘR₇, C(O)R₇ or C(O)O-R₇, alkyl, haloalkyl or OR₈ or a radical -N=C(R₉)(R₁₀) ;
R₅ and R₆ represent independently from each other a hydrogen or an alkyl, haloalkyl, C(O)alkyl, or S(O)ᵣCF₃ radical ; or R₅ and R₆ may form together a divalent alkylene radical which may be interrupted by one or two divalent heteroatoms, such as oxygen or sulfur ;
R₇ represents an alkyl or haloalkyl radical ;
R₈ represents an alkyl, haloalkyl radical or a hydrogen ;
R₉ represents an alkyl radical or a hydrogen ;
R₁₀ represents a phenyl or heteroaryl group optionally substituted by one or more halogen atoms or groups such as OH, -O-alkyl, -S-alkyl, cyano, or alkyl ;
X represents a trivalent nitrogen atom or a C-R₁₂ radical, the three other valencies of the carbon atom being part of the aromatic ring ;
R₁₁ and R₁₂ represent, independently from each other, a hydrogen or halogen, CN or NO₂ ;
R₁₃ represents a halogen or a haloalkyl, haloalkoxy, S(O)_{q}CF₃ or SF₅ group ; and
m, n, q, r represent, independently from each other, an integer equal to 0, 1 or 2 ;
with the proviso that, when R₁ is methyl, then either R₃ is haloalkyl, R₄ is NH₂, R₁₁ is Cl, R₁₃ is CF₃, and X is N ; or R₂ is 4,5-dicyanoimidazol 2-yl, R₄ is Cl, R₁₁ is Cl, R₁₃ is CF₃, and X is =C-Cl.

2. A flexible web according to claim 1, wherein the compound of formula (I) is such that R₁ is CN, and/or R₃ is haloalkyl, and/or R₄ is NH₂, and/or R₁₁ and R ₁₂ are independently from each other a halogen atom and/or R₁₃ is haloalkyl.

3. A flexible web according to claim 1 or 2, wherein the compound of formula (I) is fipronil.

4. A flexible web according to anyone of claims 1 to 3, characterized in that the compound of formula (I) is uniformly distributed in the fibers.

5. A flexible web according to anyone of claims 1 to 4, characterized in that it has an air permability which is from 50 to 10 000 l.s⁻¹m⁻², preferably from 70 to 5000 l.s⁻¹m⁻².

6. A flexible web according to anyone of claims 1 to 5, characterized in that the fibers are substantially free from pores.

7. A flexible web according to anyone of claims 1 to 6, characterized in that it is provided as strips having a width of from 20 cm to 4 m, preferably from 30 cm to 3 m.

8. A flexible web according to anyone of claims 1 to 7, characterized in that it has a thickness comprised from 0.05 mm to 2 cm, preferably from 0.1 to 1 cm.

9. A flexible web according to anyone of claims 1 to 8, characterized in that it has a weight per square meter from 10 to 2500 g/m², preferably from 100 to 1000 g/m².

10. A flexible web according to anyone of claims 1 to 9, characterized in that the fibers are man-made fibers either based on chemically modified natural organic polymers or on synthetic organic polymers.

11. A flexible web according to anyone of claims 1 to 10, characterized in that the fibers are made of a cellulosic derivative, preferably an ester of cellulose, more preferably of cellulose acetate.

12. A flexible web according to anyone of claims 1 to 10, characterized in that the fibers are non woven.

13. A flexible web according to anyone of claims 1 to 12, characterized in that the fibers have a diameter comprised from 5 to 500 µm, preferably from 15 to 100 µm, and a linear weight from 0.5 to 50 decitex, preferably from 1 to 25 decitex.

14. A flexible web according to anyone of claims 1 to 13, characterized in that the amount of the compound of formula (I) in the fibers is such as to have a web with a content of said compound from 0.01 to 20 g/m², preferably from 0.1 to 10 g/m².

15. Method for controlling the infestation of buildings by subterranean pests, which comprises applying on the excavation site before the erection of the building a flexible web according to anyone of claims 1 to 14.

16. Method according to claim 15, wherein the subterranean pests are termites.
